# EUROPEAN PATENT APPLICATION

(11) **EP 2 991 407 A1**
(43) Date of publication of application: **02.03.2016**
(21) Application number: 14791601.9
(22) Date of filing: 25.04.2014
(51) Int. Cl.: H04W 48/08

(54) **METHOD, DEVICE, AND SYSTEM FOR CONFIGURING ACCESS TECHNOLOGIES**

(30) Priority: 28.04.2013 CN 201310157704
(71) Applicant: Huawei Technologies Co., Ltd., Longgang District Shenzhen, Guangdong 518129 (CN)
(72) Inventor: LI, You, Shenzhen Guangdong 518129 (CN); ZENG, Kun, Shenzhen Guangdong 518129 (CN)
(74) Representative: Epping - Hermann - Fischer
(86) International application number: PCT/CN2014/076216
(87) International publication number: WO 2014/177019

(57) **Abstract**

Embodiments of the present invention disclose a method, a device and a system for access technology configuration, and relate to the field of communication technologies. A function unit can be configured according to multiple access technologies, thereby solving a problem of waste of resources resulting from incapacity to fully utilize network resources. The method includes: receiving a registration request of an access point, where the registration request includes a function unit list or a module class identification in the access point, the function unit list includes all function unit lists of a new module in the access point or a newly-added function unit list of the new module, and the module class identification is used to differentiate modules including different function units in the access point; identifying an access technology of the access point according to the function unit list or the module class identification, and generating access technology configuration information; and sending the access technology configuration information to the access point, so that the access point configures the access technology corresponding to the access point according to the access technology configuration information. The embodiments of the present invention are applied to radio access technologies.

## Description

### TECHNICAL FIELD

The present invention relates to the field of communication technologies and, in particular, to a method, a device and a system for access technology configuration.

### BACKGROUND

In a modem communication network, with development of radio access technologies, an access point in an existing wireless network may have a plurality of access technologies, such as wireless fidelity WIFI, long term evolution (Long Term Evolution, LTE), third generation mobile communication technology (3rd-generation, 3G), etc. Based on the radio access technologies, an existing technical solution provides a method for configuring multiple access technologies that is performed by a base station, where resource capacity of the base station is fed back, a corresponding access technology is configured according to the resource capacity, and resource information supporting the access technology is allocated for the base station, and thereby support for the multiple access technologies is satisfied. However, there isn't a specific implementation of a method for multiple use and configuration of access modules corresponding to the multiple access technologies, and moreover, in a scenario provided by the existing technical solution, there is a lack of practical means in the radio access technologies about how to apply a new module, which is introduced after version upgrade, to a current access technology and current configuration.

The inventors have found the following problem in the prior art: a method is provided in the prior art where an access point automatically loads different access technologies according to a specific need, an access point does not make full use of a function unit within a module, and in a scenario of the prior art, a radio access technology (Radio Access Technology, RAT) supported by the access point is fixed, which does not help the access point in introducing a new module so as to achieve upgrading of the radio access technology, and thus network resources cannot be reused, thereby causing a waste of the network resources.

### SUMMARY

Embodiments of the present invention provide a method, a device and a system for access technology configuration, which can configure a function unit according to multiple access technologies, and thus solve a problem of waste of resource resulting from incapacity to fully utilize network resources.

In order to achieve the above-described objective, embodiments of the present invention employ the following technical solutions.

In a first aspect, a method for access technology configuration is provided, including:
receiving a registration request of an access point, where the registration request includes a function unit list or a module class identification in the access point, the function unit list includes all function unit lists of a new module in the access point or a newly-added function unit list of the new module, and the module class identification is used to differentiate modules in the access point which include different function units;
identifying, according to the function unit list or the module class identification, an access technology of the access point, and generating access technology configuration information; and
sending the access technology configuration information to the access point, so that the access point configures the access technology corresponding to the access point according to the access technology configuration information.

In a first possible implementation mode, according to the first aspect, specifically including: the new module in the access point includes at least one function unit and a function unit list corresponding to the function unit or the module class identification.

In a second possible implementation mode, according to the first aspect or the first possible implementation mode, specifically including, the identifying, according to the function unit list or the module class identification, the access technology of the access point, and generating the access technology configuration information, includes:
recording, according to the function unit list, a newly-added function unit in the access point, and matching a function unit required for a current access technology with each function unit included in the access point; or,
identifying, according to the module class identification, the newly-added function unit in the access point, and matching the function unit required for the current access technology with each function unit included in the access point;
if the function unit list of the access technology matches the function unit in the access point, then recording that the access point is capable of supporting the access technology and generating the access technology configuration information.

In a third possible implementation mode, according to the first aspect or the first possible implementation mode, specifically including, the identifying, according to the function unit list or the module class identification, the access technology of the access point, and generating the access technology configuration information, further includes:
if the access technology cannot be identified, then sending a query message to a network side device;
receiving a function calling message sent by the network side device according to the query message, where the function calling message includes an identification of an access technology to which a function unit belongs and a full function list of the access technology;
identifying, according to the function calling message, an access technology that can be supported by the function unit in the access point; and
receiving an activation command sent by the network side network and generating the access technology configuration information.

In a fourth possible implementation mode, according to the third possible implementation mode, specifically including, the access technology configuration information includes:
an identification of the access technology, a calling sequence of a function unit required for the new module, and algorithm configuration and parameter configuration of the function unit.

In a fifth possible implementation mode, according to the third possible implementation mode, specifically including, the query message includes:
a function unit list included in the new module or the newly-added function unit list of the new module, or the class identification of the new module.

In a sixth possible implementation mode, according to the first aspect, the method further includes:
receiving new access technology information sent by the network side device, and identifying and recording supporting capacity of the access point for a new access technology according to the new access technology information;
receiving an access technology activation command sent by the network side device, where the access technology activation command is used to activate the new access technology information received by a control device, so that the control device can select an access point supporting the new access technology and a function unit supporting the new access technology according to an identification of the new access technology; and
sending configuration information of the new access technology to the access point.

In a seventh possible implementation mode, according to the sixth possible implementation mode, specifically including, the new access technology information includes:
a version identification of the access technology, a version full function list of the access technology, and protocol stack software corresponding to the function unit.

In an eighth possible implementation mode, according to the sixth possible implementation mode, specifically including, the configuration information of the new access technology includes:
a version identification of the access technology, a function unit required for the access technology and a calling sequence of the function unit, and algorithm configuration and parameter configuration of the function unit and protocol stack software corresponding to the function unit.

In a second aspect, a method for access technology configuration is provided, including:
sending a registration request to a control device, where the registration request includes a function unit list or a module class identification in an access point, the function unit list includes all function unit lists of a new module in the access point or a newly-added function unit list of the new module, and the module class identification is used to differentiate modules in the access point which include different function units;
receiving a registration request response message sent by the control device according to the registration request; and
receiving access technology configuration information corresponding to a module in the access point which is generated by the control device according to the function unit list, and configuring a function unit within the access point according to the access technology configuration information.

In a first possible implementation mode, according to the second aspect, specifically including, the new module in the access point includes at least one function unit and a function unit list corresponding to the function unit or the module class identification.

In a second possible implementation mode, according to the second aspect or the first possible implementation mode, specifically including, before sending the registration request to the control device, further including:
registering the function unit list included in the new module or identifying a class identification of the new module.

In a third possible implementation mode, according to the second aspect, specifically including, the receiving the access technology configuration information corresponding to the module in the access point which is generated by the control device according to the function unit list, and configuring the function unit within the access point according to the access technology configuration information, further includes:
selecting, by the access point, a function unit required for an access technology, and recording a calling sequence of the function unit and generating configuration information of the function unit;
or,
identifying, by the access point, the function unit required for the access technology, and recording the calling sequence of the function unit and generating the configuration information of the function unit.

In a fourth possible implementation mode, according to the third possible implementation mode, specifically including, after recording the calling sequence of the function unit and generating the configuration information of the function unit, further including:
sending the configuration information to the function unit via an internal proxy identification node of the access point and completing the configuration of the function unit, where the internal proxy identification node is configured to register and configure the function unit in the access point.

In a third aspect, a method for access technology configuration is provided, including:
receiving a query message sent by a control device, and sending a function calling message of a current access technology according to the query message, so that the control device identifies an access technology that can be supported by a function unit in an access point according to the function calling message; and
sending an activation command to the control device, so that the control device selects an access point supporting the access technology and/or generates access technology configuration information corresponding to the function unit according to the activation command.

In a first possible implementation mode, according to the third aspect, specifically including, the receiving the query message sent by the control device, and the sending the function calling message of the current access technology according to the query message, includes:
searching, by the network side device, an access technology corresponding to the function unit according to a newly-added function unit list carried in the query message, and generating the function calling message according to an identification of the access technology corresponding to the function unit and a full function list of the access technology; and
sending the function calling message to the control device;
or,
searching, by the network side device, a function unit corresponding to the module according to a module class identification carried in the query message, and generating the function calling message according to the identification of the access technology corresponding to the function unit and the full function list of the access technology; and
sending the function calling message to the control device.

In a second possible implementation mode, according to the first possible implementation mode, specifically including, the module class identification is used to differentiate modules in the access point which include different function units.

In a third possible implementation mode, according to the third aspect, specifically including, the method further includes:
configuring a new access technology, and sending access technology information of the new access technology to the control device;
sending an activation command corresponding to the new access technology, so that the control device selects an access point and/or a function unit corresponding to the access technology according to the activation command.

In a fourth possible implementation mode, according to third possible implementation mode, specifically including, the access technology information of the new access technology includes:
a version identification of the access technology, a version full function list of the access technology and protocol stack software corresponding to the function unit.

In a fourth aspect, a control device is provided, including:
a receiving unit, configured to receive a registration request of an access point, where the registration request includes a function unit list or a module class identification in the access point, the function unit list includes all function unit lists of a new module in the access point or a newly-added function unit list of the new module, and the module class identification is used to differentiate modules in the access point which include different function units;
a configuring unit, configured to identify, according to the function unit list or the module class identification received by the receiving unit, an access technology of the access point, and generate access technology configuration information; and
a sending unit, configured to send the access technology configuration information configured by the configuring unit to the access point, so that the access point configures the access technology corresponding to the access point according to the access technology configuration information.

In a first possible implementation mode, according to the fourth aspect, specifically including, the new module in the access point includes at least one function unit and a function unit list corresponding to the function unit or the module class identification.

In a second possible implementation mode, according to the fourth aspect or the first possible implementation mode, specifically including, the configuring unit further includes:
a matching subunit, configured to record, according to the function unit list, a newly-added function unit in the access point, and match each function unit included in the access point with a function unit required for a current access technology;
or,
the matching subunit further configured to identify, according to the module class identification, the newly-added function unit in the access point, and match the function unit required for the current access technology with each function unit included in the access point;
the matching subunit further configured to: if the function unit list of the access technology matches the function unit in the access point, then record that the access point is capable of supporting the access technology and generate the access technology configuration information.

In a third possible implementation mode, according to the fourth aspect or the first possible implementation mode, specifically including, the configuring unit further includes:
a configuring subunit, configured to: if the access technology cannot be identified by the control device, then send a query message to a network side device;
an acquiring subunit, configured to receive a function calling message sent by the network side device according to the query message, where the function calling message includes an identification of an access technology to which a function unit belongs and a full function list of the access technology;
an identifying subunit, configured to identify, according to the function calling message, an access technology that can be supported by the function unit in the access point ; and
a communication subunit, configured to receive an activation command sent by the network side network and generate the access technology configuration information.

In a fourth possible implementation mode, according to the third possible implementation mode, specifically including, the access technology configuration information includes:
an identification of the access technology, a calling sequence of a function unit required for the new module, and algorithm configuration and parameter configuration of the function unit.

In a fifth possible implementation mode, according to the third possible implementation mode, specifically including, the query message includes:
the function unit list included in the new module or the newly-added function unit list of the new module, or a class identification of the new module.

In a sixth possible implementation mode, according to the fourth aspect, the control device further includes:
the receiving unit further configured to receive new access technology information sent by the network side device, and identify and record a supporting capacity of the access point for a new access technology according to the new access technology information;
the receiving unit further configured to receive an access technology activation command sent by the network side device, where the access technology activation command is used to activate the new access technology information received by the control device, so that the control device can select an access point supporting the new access technology and a function unit supporting the new access technology according to an identification of the new access technology; and
the sending unit further configured to send configuration information of the new access technology to the access point.

In a seventh possible implementation mode, according to the sixth possible implementation mode, specifically including, the new access technology information includes:
a version identification of the access technology, a version full function list of the access technology, and protocol stack software corresponding to the function unit.

In an eighth possible implementation mode, according to the sixth possible implementation mode, specifically including, the configuration information of the new access technology includes:
a version identification of the access technology, a function unit required for the access technology and a calling sequence of the function unit, and algorithm configuration and parameter configuration of the function unit and protocol stack software corresponding to the function unit.

In a fifth aspect, an access point is provided, including:
a sending unit, configured to send a registration request to a control device, where the registration request includes a function unit list or a module class identification in the access point, the function unit list includes all function unit lists of a new module in the access point or a newly-added function unit list of the new module, and the module class identification is used to differentiate modules in the access point which include different function units;
a receiving unit, configured to receive a registration request response message sent by the control device according to the registration request;
the receiving unit being further configured to receive access technology configuration information corresponding to a module in the access point which is generated by the control device according to the function unit list, and configure a function unit within the access point according to the access technology configuration information.

In a first possible implementation mode, according to the fifth aspect, specifically including, the new module in the access point includes at least one function unit and a function unit list corresponding to the function unit or the module class identification.

In a second possible implementation mode, according to the fifth aspect or the first possible implementation mode, the access point further includes:
a registering unit, configured to register the function unit list included in the new module or identify a class identification of the new module before the registration request to the control device is sent.

In a third possible implementation mode, according to the fifth aspect, specifically including, the receiving unit includes:
a selecting subunit, configured to select a function unit required for the access technology, and record a calling sequence of the function unit and generate configuration information of the function unit;
or,
an identifying subunit, configured to identify the function unit required for the access technology, and record the calling sequence of the function unit and generate the configuration information of the function unit.

In a fourth possible implementation mode, according to the third possible implementation mode, specifically including, the sending unit further includes:
a configuring subunit, configured to send the configuration information to the function unit via an internal proxy identification node of the access point after the calling sequence of the function unit is recorded and the configuration information of the function unit is generated, and complete the configuration of the function unit, where the internal proxy identification node is configured to register and configure the function unit in the access point.

In a sixth aspect, a network side device is provided, including:
a communication unit, configured to receive a query message sent by a control device, and send a function calling message of a current access technology according to the query message, so that the control device identifies an access technology that can be supported by a function unit in an access point according to the function calling message; and
a sending unit, configured to send an activation command to the control device, so that the control device selects an access point supporting the access technology and/or generates access technology configuration information corresponding to the function unit according to the activation command.

In a first possible implementation mode, according to the sixth aspect, the communication unit includes:
a querying subunit, configured to search an access technology corresponding to the function unit according to a newly-added function unit list carried in the query message, and generate a function calling message according to an identification of the access technology corresponding to the function unit and a full function list of the access technology; and
a sending subunit, configured to send the function calling message generated by the querying subunit to the control device;
or,
the querying subunit is configured to search a function unit corresponding to the module according to a module class identification carried in the query message, and generate the function calling message according to the identification of the access technology corresponding to the function unit and the full function list of the access technology; and
the sending subunit is configured to send the function calling message generated by the querying subunit to the control device.

In a second possible implementation mode, according to the first possible implementation mode, specifically including, the module class identification is used to differentiate modules in the access point which include different function units.

In a third possible implementation mode, according to the sixth aspect, specifically including, the network side device further includes:
a configuring unit, configured to configure a new access technology, and send access technology information of the new access technology to the control device;
the sending unit is configured to send an activation command corresponding to the new access technology, so that the control device selects an access point and/or a function unit corresponding to the access technology according to the activation command.

In a fourth possible implementation mode, according to the third possible implementation mode, specifically including, the access technology information of the new access technology includes:
a version identification of the access technology, a version full function list of the access technology and protocol stack software corresponding to the function unit.

In a seventh aspect, a communication system is provided, including: a control device, at least one access point and a network side device, where,
the control device is a control device according to any one of implementation modes in the fourth aspect, the at least one access point is an access point according to any one of implementation modes in the fifth aspect, and the network side device is a network side device according to any one of implementation modes in the sixth aspect.

According to a method, a device and a system for access technology configuration provided in embodiments of the present invention, a control device queries a network side device and configures corresponding access technology configuration information of a function unit for an access point according to radio access technology information provided by the network side device, and the function unit corresponding to the radio access technology is configured in the access point, so that the function unit can be applied to multiple radio access technologies and configuration information of a new radio access technology can be saved by a network side device, and thus reuse of the function unit can be realized according to corresponding multiple access technologies, network resources are thereby saved, and a problem of waste of resources resulting from incapacity to fully utilize the network resources is solved.

### BRIEF DESCRIPTION OF DRAWINGS

In order to make technical solutions in embodiments of the present invention or the prior art clearer, accompanying drawings used for description of the embodiments of the present invention or the prior art will be briefly described hereunder. Obviously, the described drawings are merely some embodiments of present invention. For persons skilled in the art, other drawings may be obtained based on these drawings without any creative effort.
FIG. 1 is a schematic flow chart of a method for access technology configuration according to an embodiment of the present invention;
FIG. 2 is a schematic flow chart of another method for access technology configuration according to an embodiment of the present invention;
FIG. 3 is a schematic flow chart of still another method for access technology configuration according to an embodiment of the present invention;
FIG. 4 is a schematic flow chart of a method for access technology configuration according to another embodiment of the present invention;
FIG. 5 is a schematic flow chart of a method for access technology configuration according to still another embodiment of the present invention;
FIG. 6 is a schematic flow chart of a method for access technology configuration according to still another embodiment of the present invention;
FIG. 7 is a schematic flow chart of still another method for access technology configuration according to an embodiment of the present invention;
FIG. 8 is a schematic structural diagram of a control device according to an embodiment of the present invention;
FIG. 9 is a schematic structural diagram of another control device according to an embodiment of the present invention;
FIG. 10 is a schematic structural diagram of still another control device according to an embodiment of the present invention;
FIG. 11 is a schematic structural diagram of an access point according to an embodiment of the present invention;
FIG. 12 is a schematic structural diagram of another access point according to an embodiment of the present invention;
FIG. 13 is a schematic structural diagram of still another access point according to an embodiment of the present invention;
FIG. 14 is a schematic structural diagram of still another access point according to an embodiment of the present invention;
FIG. 15 is a schematic structural diagram of a network side device according to an embodiment of the present invention;
FIG. 16 is a schematic structural diagram of another network side device according to an embodiment of the present invention;
FIG. 17 is a schematic structural diagram of still another network side device according to an embodiment of the present invention;
FIG. 18 is a schematic structural diagram of a communication system according to an embodiment of the present invention.

### DESCRIPTION OF EMBODIMENTS

Technical solutions in embodiments of the present invention will be described clearly and completely hereinafter with reference to accompanying drawings in embodiments of the present invention. Obviously, the described embodiments are only a part of embodiments of the present invention, rather than all embodiments of the present invention. All other embodiments obtained by persons of ordinary skill in the art based on embodiments of the present invention without any creative effort shall fall within the protection scope of the present invention.

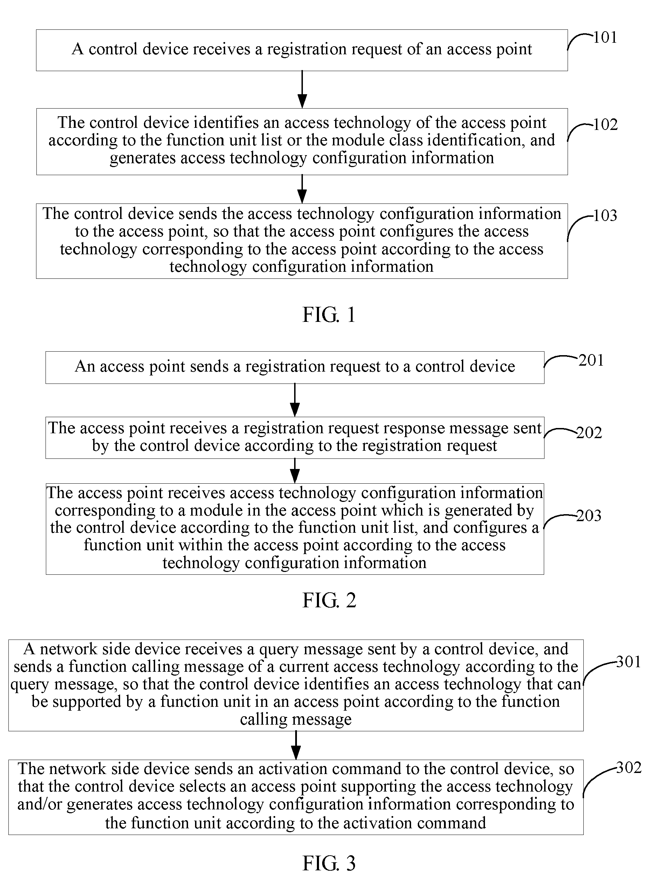

In embodiments of the present invention, an entity that performs communications may be any entity in an access network and a core network, for example, an LTE evolved node base (evolved Node Base, eNB for short), a signaling gateway (Signaling Gateway, S-GW for short), a packet gateway (Packet Gateway, PGW for short), etc., and for another example, a Node B of a UMTS, a radio network controller (Radio Network Controller, RNC for short), a serving support node (Serving GPRS SUPPORT NODE, SGSN for short), a gateway GPRS support node (Gateway GPRS Support Node, GGSN for short), etc. For radio access technologies (such as wireless fidelity (Wireless Fidelity, WIFI), long term evolution (Long Term Evolution, LTE), third generation mobile communication technology (3rd-generation, 3G), etc.), an access point selects corresponding modules according to multiple radio access technologies, and performs selection and use according to specific function of function units in the modules and calling sequences of the function units. The present invention provides a method for access technology configuration based on the radio access technologies, and at a control device side, reference may be made to FIG. 1, including the following processes:
101, a control device receives a registration request of an access point.

The registration request includes a function unit list in the access point or a module class identification, where the function unit list includes all function unit lists of a new module in the access point or a newly-added function unit list of the new module. The function unit list includes a function unit list of a new module in the access point or a newly-added function unit list of the new module, and the module class identification is used to differentiate modules in the access point which include different function units. During registration of a function unit, a parameter of the function unit includes an identification of the function unit; during selection of a function unit, a parameter of the function unit includes: an algorithm and a processing capacity supported by the function unit.

Herein, after receiving the registration request of the access point, the control device records a function of the access point (Access Point, AP), and triggers an operation of identifying a radio access technology (Radio Access Technology, RAT), and then feeds back a module registration request response message to the AP, so that the AP waits for the control device to send access technology configuration information of a corresponding module according to the module registration request response message.

Furthermore, the new module in the access point includes at least one function unit and a function unit list corresponding to the function unit or a module class identification.

102, the control device identifies an access technology of the access point according to the function unit list or the module class identification, and generates access technology configuration information.

The control device determines whether the function unit included in the module of the access point supports a current access technology according to the registration request, specifically including:
a₁, the control device records the newly-added function unit in the access point according to the function unit list, and matches a function unit required for the current access technology with each function unit included in the access point.
   Or,
a₂, the control device identifies the newly-added function unit in the access point according to the module class identification, and matches the function unit required for the current access technology with each function unit included in the access point.
b, if the function unit list of the current access technology matches the function unit in the access point, then record that the access point is capable of supporting the current access technology and generate the access technology configuration information.

103, the control device sends the access technology configuration information to the access point, so that the access point configures the access technology corresponding to the access point according to the access technology configuration information.

The control device Controller sends the access technology configuration information to the access point according to an activation command received, the access technology configuration information herein includes: an identification of the radio access (Radios Access Technology, RAT), a function unit required for the radio access technology RAT and a calling sequence of the function unit, and algorithm configuration and parameter configuration of the function unit.

The access technology herein includes: types of the radio access technology such as wireless fidelity WIFI, long term evolution (Long Term Evolution, LTE), and third generation mobile communication technology (3rd-generation, 3G).

At an access point side, reference may be made to FIG. 2, including:
201, an access point sends a registration request to a control device.

The registration request includes a function unit list or a module class identification in an access point, the function unit list includes all function unit lists of a new module in the access point or a newly-added function unit list of the new module, and the module class identification is used to differentiate modules in the access point which include different function units.

Furthermore, the new module in the access point includes at least one function unit and a function unit list corresponding to the function unit or a module class identification.

Herein, the registration request sent by the access point to the control device includes: all function unit list of a new module inserted into the access point (Access Point, AP), or a newly-added function unit list of the new module, or a module class identification.

Specifically, the module in the access point includes at least one function unit, there are different types of function units and the calling sequences of the function units are different so that the same type of function unit can be applied to multiple access technologies, the function unit may be a function, hardware or a processing unit having both hardware and software capacities.

202, the access point receives a registration request response message sent by the control device according to the registration request.

203, the access point receives access technology configuration information corresponding to a module in the access point which is generated by the control device according to the function unit list, and configures a function unit within the access point according to the access technology configuration information.

Herein, the access point identifies, via an internal proxy, a function unit internally required for the point according to the received access technology configuration information, records a calling sequence of the function unit and completes the configuration of the corresponding function.

At a side of a network side device, reference may be made to FIG. 3, including:

301, a network side device receives a query message sent by a control device, and sends a function calling message of a current access technology according to the query message, so that the control device identifies an access technology that can be supported by a function unit in an access point according to the function calling message.

Here, the network side device sends a parameter message of the current access technology according to the query message, specifically including:
the network side device searches an access technology corresponding to the function unit according to a newly-added function unit list carried in the query message, and generates the function calling message according to an identification of the access technology corresponding to the function unit and a full function list of the access technology; and
sending the function calling message to the control device;
or,
the network side device searches a function unit corresponding to a module according to a module class identification carried in the query message, and generates a function calling message according to an identification of the access technology corresponding to the function unit and a full function list of the access technology; and
sending the function calling message to the control device.

302, the network side device sends an activation command to the control device, so that the control device selects an access point supporting the access technology and/or generates access technology configuration information corresponding to the function unit according to the activation command.

Herein, the activation command sent by the network side device to the control device is corresponding to the radio access technology (Radio Access Technology, RAT) so as to trigger the control device to generate access technology configuration information of the function unit in the access point of the corresponding RAT.

In a method for access technology configuration provided in the embodiments of the present invention, access technology configuration information of the corresponding function unit is configured for an access point according to access technology information provided by a network side device, and the function unit corresponding to the access technology is configured in the access point, so that the function unit can be applied to multiple access technologies and configuration information of a new access technology can be saved via a network side device, thus reuse of the function unit can be realized according to corresponding multiple access technologies, thereby network resources are saved, and a problem of waste of resources resulting from incapacity to fully utilize the network resources is solved.

Specifically, descriptions will be made hereunder with reference to specific embodiments.

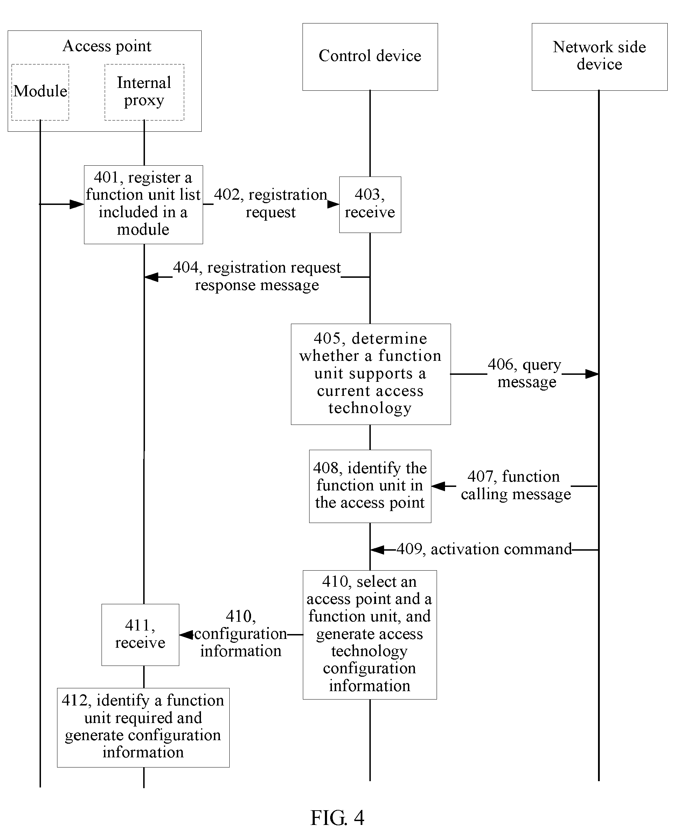

Based on the embodiments as shown in FIG. 1, FIG. 2 and FIG. 3, reference may be made to FIG. 4, an embodiment of the present invention provides a method for access technology configuration, as shown in FIG. 4, which is a process where a control device selects a function unit for an access technology in an access point according to all function unit lists of a new module or a newly-added function unit list of the new module, and specific steps thereof are as below:
401, an access point registers a function unit list included in a module.

Herein, an access point (Access Point, AP) registers a function unit list, which takes all function unit lists of a module as an example, where, after the access point is inserted with a new module, then an internal proxy identification node of the access point performs registration of the new module, and registration of the new module includes all function unit lists of the new module.

The internal proxy identification node in the access point is configured to register and configure a function unit in the access point.

Furthermore, the new module in the access point includes at least one function unit and a function unit list corresponding to the function unit.

402, the access point sends a registration request to a control device.

The registration request includes a module function parameter in the access point.

Herein, the registration request of the new module reported by the access point AP to the control device Controller includes:
all function unit lists of the new module; or, a newly-added function unit list of the new module.

Herein, the module includes at least one function unit, and calling sequences of function units in modules are also different in different radio access technologies (Radio Access Technology, RAT).

403, the control device receives the registration request of the access point.

The control device receives a request message of the access point, records a function of the access point (Access Point, AP), triggers an access technology capacity identification operation, and feedbacks a registration request response message of the module to the access point.

Herein, after the control device receives the registration request of the access point, the control device will send a registration request response message to the access point, where the registration request response message indicates that the control device side has received the registration request sent by the access point, and performs identification of a function unit in the access point and generation of a configuration parameter corresponding to the corresponding function unit.

404, the access point receives a registration request response message sent by the control device according to the registration request.

405, the control device identifies an access technology of the access point according to the function unit list, and generates access technology configuration information.

Herein, the control device Controller records a newly-added function unit of the AP, and matches the function unit of the AP with a function unit list of a current RAT, and if it is identified that the function unit of the access point matches a function unit required for the current RAT, then record that the AP is capable of supporting the RAT, and wait for a network side device to send an activation command.

406, if the control device cannot identify the access technology, then it sends a query message to the network side device.

Herein, if the control device cannot identify whether the function unit in the AP supports the RAT, then the control device sends a query message to the network side device so as to configure the AP according to a parameter message sent by the network side device.

The query message sent by the control device includes: all function unit lists of the new module, or, the newly-added function unit list of the new module.

407, the network side device receives the query message sent by the control device, and sends a function calling message of the current access technology according to the query message, so that the control device identifies an access technology that can be supported by the function unit in the access point according to the function calling message.

Herein, taking a database as an example of the network side device, the database searches an RAT corresponding to the function unit according to the newly-added function unit list in the RAT function query message, and sends an identification of the RAT to which the function unit belongs and a full function list of the RAT to the controller.

408, the control device receives the function calling message sent by the network side device, and identifies the access technology that can be supported by the function unit in the access point according to the function calling message.

The function calling message includes an identification of an access technology to which the function unit belongs and a full function list of the access technology.

Herein, the function calling message of the current radio access technology received by the control device Controller is the identification of the RAT to which the function unit in the AP belongs and the full function list of the RAT.

Specifically, taking a database as an example of the network side device, the control device Controller receives new RAT information sent by the database, and identifies the RAT that can be supported by the function unit according to the function unit of the AP.

When the control device is identifying an RAT supporting capacity of the AP, this process may be performed when the control device receives an RAT activation command; the identifying of the RAT supporting capacity may also be triggered after a new function unit of the AP is registered; and it is also possible that the database configures the new RAT information and then the network side triggers determination of whether the AP has the capacity for supporting the RAT.

409, the network side device sends an activation command to the control device, so that the control device selects an access point supporting the access technology and/or generates access technology configuration information corresponding to the function unit according to the activation command.

Herein, a database is taken as an example of the network side device, the database may also be a traditional network management device (such as a router, or a switch), or a separate device; specifically, the RAT activation command may be sent by the database, and may also be sent by the network management device.

410, the control device sends the access technology configuration information to the access point, so that the access point configures an access technology corresponding to the access point according to the access technology configuration information.

The control device selects an access point supporting the access technology and a corresponding function unit by receiving the activation command sent by the network side device, and generates the access technology configuration information, and sends the access technology configuration information to the access point.

Herein, taking a database as an example of the network side device, the control device Controller may also query the network side device periodically, so that the control device identifies the access point's capacity for supporting the RAT.

Specifically, after receiving the RAT activation command sent by the database, the Controller selects an AP supporting the RAT and a corresponding function unit on the AP according to the identification of the RAT, and generates the access technology configuration information sent to the AP.

The activation command received by the control device is provided by the network side device in step 409 or is generated based on a method provided in step 409.

411, the access point receives the access technology configuration information corresponding to the module in the access point which is generated by the control device according to the function unit list, and configures the function unit within the access point according to the access technology configuration information.

Herein, the access technology configuration information sent by the control device and received by the access point includes: an identification of the radio access (Radio Access Technology, RAT), a function unit and a calling sequence of the function unit, and algorithm configuration and parameter configuration of the function unit.

The access point AP can be applied to different radio access technologies RAT according to different calling sequences of the function unit, and through the access technology configuration information generated by the control device, the access point configures a newly inserted module so as to satisfy a different current RAT technology.

412, the access point identifies a function unit required for the access point, records a calling sequence of the function unit, and generates configuration information of the function unit.

Herein, an internal proxy of the access point identifies a function unit required for the access point, and records a calling sequence of the function unit according to the access technology configuration information sent by the control device received in step 411, and completes the configuration of the corresponding function unit.

According to a method for access technology configuration provided in the embodiment of the present invention, a control device receives all function unit lists of a new module or a newly-added function list of the new module sent by an access point, determines whether a function unit in the access point matches a function unit list of a current access technology, and, if not matching, then sends a query message to a network side device so as to obtain a corresponding parameter message, and generates access technology configuration information of the function unit in the corresponding access point according to the parameter message, so that the access point can configure the function unit according to the access technology configuration information to thereby satisfy different access technologies, and thus reuse of the function unit can be realized according to corresponding multiple access technologies, thereby network resources are saved, and a problem of waste of resources resulting from incapacity to fully utilize the network resources is resolved.

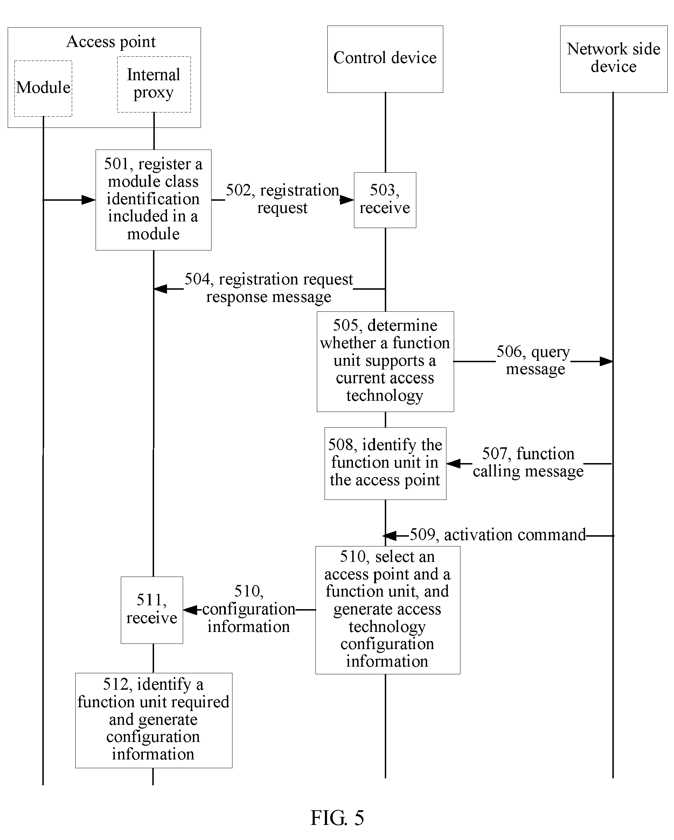

Based on the embodiments as shown in FIG. 1, FIG. 2 and FIG. 3, reference may be made to FIG. 5, an embodiment of the present invention provides a method for access technology configuration, as shown in FIG. 5, which is a process where a control device selects a function unit for an access technology in an access point according to a module class identification, and specific steps thereof are as below:
501, an access point registers a module class identification included in a module.

Herein, an access point (Access Point, AP) registers a function unit list, which takes a module class identification as an example, where, after the access point is inserted with a new module, an internal proxy identification node of the access point then performs registration of the new module, and the registration of the new module includes a module class identification of the new module.

The internal proxy identification node in the access point is configured to register and configure a function unit in the access point.

502, the access point sends a registration request to a control device.

The registration request includes the module class identification in the access point.

Herein, the registration request of the new module reported by the access point AP to the control device Controller includes:
the module class identification. The module class identification is used to differentiate modules in the access point which include different function units, so that the control device can acquires a function unit corresponding to the module according to the module class identification, thereby further performing operations of access technology identification and access point configuration.

Herein, the module includes at least one function unit, and calling sequences of function units in modules are also different in different radio access technologies (Radio Access Technology, RAT) . The access point in the embodiment of the present invention sends the module class identification of the module to the control device, and the control device determines according to the module class identification whether a function unit included in the module of the access point matches a function unit list of a RAT.

Here, the access point replaces the function list with the module class identification, which can reduce a signaling load between the access point and the control device.

503, the control device receives the registration request of the access point.

The control device receives a request message of the access point, records a function of the access point (Access Point, AP), triggers an access technology capacity identification operation, and feedbacks a registration request response message of the module to the access point.

Herein, after the control device receives the registration request of the access point, the control device will send a registration request response message to the access point, where the registration request response message indicates that the control device side has received the registration request sent by the access point, and performs identification of a function unit in the access point and generation of a configuration parameter corresponding to the function unit.

504, the access point receives a registration request response message sent by the control device according to the registration request.

505, the control device identifies an access technology of the access point according to the module class identification, and generates access technology configuration information.

Herein, the control device Controller records a newly-added function unit of the AP, and matches the function unit of the AP with a function unit list of a current RAT, if it is identified that the function unit of the access point matches a function unit required for the current RAT, then record that the AP is capable of supporting the RAT, and wait for a network side device to send an activation command.

506, if the control device cannot identify the access technology, then it sends a query message to the network side device.

Herein, if the control device cannot identify whether the function unit in the AP supports the RAT, then the control device sends a query message to the network side device so as to configure the AP according to a parameter message sent by the network side device.

The query message sent by the control device includes: a class identification of a module included in the access point.

507, the network side device receives the query message sent by the control device, and sends a function calling message of the current access technology according to the query message, so that the control device identifies an access technology that can be supported by the function unit in the access point according to the function calling message.

Herein, taking a database as an example of the network side device, the database searches a function unit corresponding to the module according to the module class identification in the RAT function query message, and sends an identification of the RAT to which the function unit belongs and a full function list of the RAT and the function list corresponding to the module to the controller.

508, the control device receives the function calling message sent by the network side device, and identifies the access technology that can be supported by the function unit in the access point according to the function calling message.

The function calling message includes an identification of an access technology to which the function unit belongs and a full function list of the access technology.

Herein, parameter information of the current access technology received by the control device Controller is the identification of the RAT to which the function unit in the AP belongs and the full function list of the RAT.

Specifically, taking a database as an example of the network side device, the control device Controller receives new RAT information sent by the database, and identifies the RAT that can be supported by the function unit according to the function unit of the AP.

509, the network side device sends an activation command to the control device, so that the control device selects an access point supporting the access technology and/or generates access technology configuration information corresponding to the function unit according to the activation command.

Herein, taking a database as an example of the network side device, the database may also be a traditional network management device (such as a router, or a switch), or a separate device; specifically, the RAT activation command may be sent by the database, and may also be sent by the network management device.

510, the control device sends the access technology configuration information to the access point, so that the access point configures an access technology corresponding to the access point according to the access technology configuration information.

The control device selects an access point supporting the access technology and a corresponding function unit by receiving the activation command sent by the network side device, and generates the access technology configuration information, and sends the access technology configuration information to the access point.

Herein, taking a database as an example of the network side device, the control device Controller may also query the network side device periodically, so that the control device identifies the access point's capacity for supporting the RAT.

Specifically, after receiving the RAT activation command sent by the database, the Controller selects an AP supporting the RAT and a corresponding function unit on the AP according to the identification of the RAT, and generates the access technology configuration information sent to the AP.

The activation command received by the control device is provided by the network side device in step 507 or is generated based on a method provided in step 507.

511, the access point receives access technology configuration information corresponding to the module in the access point which is generated by the control device according to the function unit list, and configures the function unit within the access point according to the access technology configuration information.

Herein, the access technology configuration information sent by the control device and received by the access point includes: an identification of the radio access (Radio Access Technology, RAT), a function unit and a calling sequence of the function unit, and algorithm configuration and parameter configuration of the function unit.

The access point AP can be applied to different radio access technologies RAT according to different calling sequences of the function unit, and through the access technology configuration information generated by the control device, the access point configures a newly inserted module so as to satisfy a different current RAT technology.

512, the access point identifies a function unit required for the access point, records a calling sequence of the function unit, and generates configuration information of the function unit.

Herein, an internal proxy of the access point identifies a function unit required for the access point, and records a calling sequence of the function unit according to the access technology configuration information sent by the control device received in step 511, and completes the configuration of the corresponding function unit.

Likewise, in the embodiment corresponding to FIG. 4, selection of a function unit is completed by a control device, and then the AP identifies the function unit required for the AP according to a configuration parameter for configuring the function unit of the AP generated by the control device, and records a calling sequence of the function unit and completes the configuration of the function unit.

The embodiment corresponding to FIG. 5 differs from the embodiment corresponding to FIG. 4 in that, in the embodiment corresponding to FIG. 5, a registration request message of an AP is a module class identification, a function unit list in the embodiment corresponding to FIG. 4 is replaced by using the module class identification, thereby reducing signaling loads between the access point and a control device, and between the control device and a network side device.

According to a method for access technology configuration provided in the embodiment of the present invention, a control device receives a module class identification sent by an access point, and determines whether a function unit in an access point matches a function unit list in a current radio access technology, and, if not matching, then sends a query message to a network side device so as to obtain a corresponding parameter message, and generates access technology configuration information corresponding to the function unit in the access point according to the parameter message, so that the access point can configure the function unit according to the access technology configuration information to thereby satisfy different radio access technologies, signaling loads between nodes are reduced in a manner of sending a module class identification by the access point, and further a problem of waste of resources resulting from incapacity to fully utilize the network resources is solved.

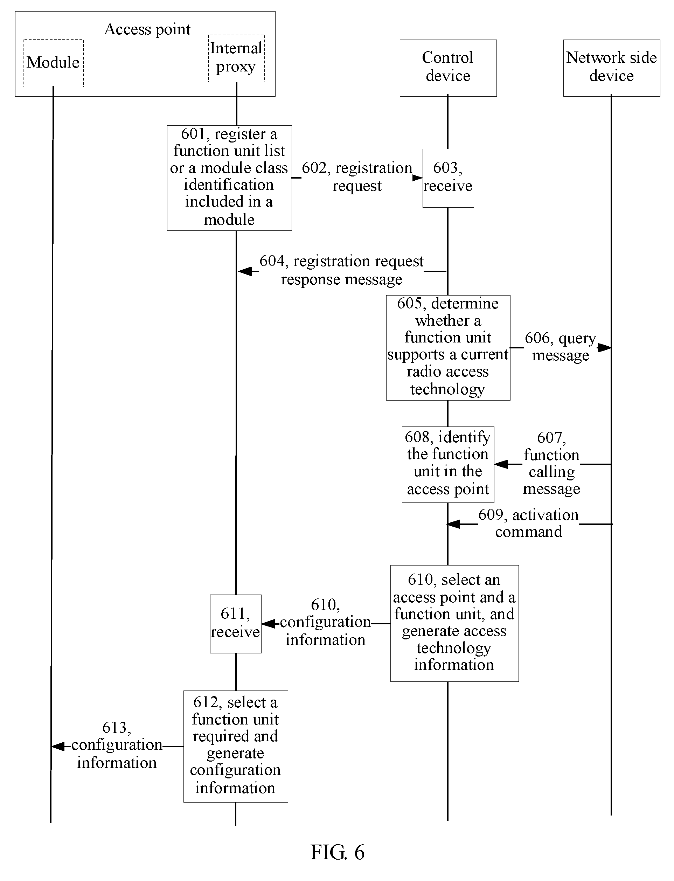

Based on the embodiments as shown in FIG. 1, FIG. 2, FIG. 3, FIG. 4 and FIG. 5, reference may be made to FIG. 6, an embodiment of the present invention provides a method for access technology configuration, as shown in FIG. 6, which is a process where a control device configures a function unit required for a radio access technology for an access point according to all function unit lists of a module or a newly-added function unit list of a new module, where the access point selects a required function unit according to the configuration of the control device, and specific steps thereof are as below:
601, an access point registers a function unit list included in a module.

Herein, an access point (Access Point, AP) registers a function unit list, which takes all function unit lists of the module as an example, where, after the access point is inserted with a new module, an internal proxy identification node of the access point then performs registration of the new module, and the registration of the new module includes all function unit lists of the new module.

The internal proxy identification node in the access point is configured to register and configure a function unit in the access point.

Furthermore, the new module in the access point includes at least one function unit and a function unit list corresponding to the function unit.

602, the access point sends a registration request to a control device.

The registration request includes a module function parameter in the access point.

Herein, the registration request of the new module reported by the access point AP to the control device Controller includes:
all function unit lists of the new module; or, a newly-added function unit list of the new module.

Herein, the module includes at least one function unit, and calling sequences of function units in modules corresponding to different radio access technologies (Radio Access Technology, RAT) are also different.

603, the control device receives the registration request of the access point.

The control device receives a request message of the access point, records a function of the access point (Access Point, AP), triggers an access technology capacity identification operation, and feedbacks a registration request response message of the module to the access point.

Herein, after the control device receives the registration request of the access point, the control device will send a registration request response message to the access point, where the registration request response message indicates that the control device side has received the registration request sent by the access point, and performs identification of a function unit in the access point and generation of a configuration parameter corresponding to the function unit.

604, the access point receives a registration request response message sent by the control device according to the registration request.

605, the control device identifies an access technology of the access point according to the function unit list, and generates access technology configuration information.

Herein, the control device Controller records a newly-added function unit of the AP, and matches the function unit of the AP with a function unit list of a current RAT, and if it is identified that the function unit of the access point matches a function unit required for the current RAT, then record that the AP is capable of supporting the RAT, and wait for a network side device to send an activation command.

606, if the control device cannot identify the access technology, then it sends a query message to the network side device.

Herein, if the control device cannot identify whether the function unit in the AP supports the RAT, then the control device sends a query message to the network side device so as to configure the AP according to a parameter message sent by the network side device.

The query message sent by the control device includes: all function unit lists of the new module, or, the newly-added function unit list of the new module.

607, the network side device receives the query message sent by the control device, and sends a function calling message of the current access technology according to the query message, so that the control device identifies an access technology that can be supported by the function unit in the access point according to the function calling message.

Herein, taking a database as an example of the network side device, the database searches an RAT corresponding to the function unit according to the newly-added function unit list in a RAT function query message, and sends an identification of the RAT to which the function unit belongs and a full function list of the RAT to the controller.

608, the control device receives the function calling message sent by the network side device, and identifies the access technology that can be supported by the function unit in the access point according to the function calling message.

The function calling message includes an identification of an access technology to which the function unit belongs and a full function list of the access technology.

Herein, parameter information of the current access technology received by the control device Controller is the identification of the RAT to which the function unit in the AP belongs and the full function list of the RAT.

Specifically, taking a database as an example of the network side device, the control device Controller receives new RAT information sent by the database, and identifies an RAT that can be supported by the function unit according to the function unit of the AP.

609, the network side device sends an activation command to the control device, so that the control device selects an access point supporting the access technology and/or generates access technology configuration information corresponding to the function unit according to the activation command.

Herein, taking a database as an example of the network side device, the database may also be a traditional network management device (such as a router, or a switch), or a separate device; specifically, the RAT activation command may be sent by the database, and may also be sent by the network management device.

610, the control device sends the access technology configuration information to the access point, so that the access point configures an access technology corresponding to the access point according to the access technology configuration information.

The control device selects an access point supporting the access technology and a corresponding function unit by receiving the activation command sent by the network side device, and generates the access technology configuration information, and sends the access technology configuration information to the access point.

Herein, taking a database as an example of the network side device, the control device Controller may also query the network side device periodically, so that the control device identifies the access point's capacity for supporting the RAT.

Specifically, after receiving the RAT activation command sent by the database, the Controller selects an AP supporting the RAT according to the identification of the RAT, and generates the access technology configuration information sent to the AP.

The activation command received by the control device is provided by the network side device in step 609 or is generated based on a method provided in step 609.

611, the access point receives the access technology configuration information corresponding to the module in the access point which is generated by the control device according to the function unit list, and configures the function unit within the access point according to the access technology configuration information.

Herein, the access technology configuration information sent by the control device and received by the access point includes: an identification of the radio access (Radio Access Technology, RAT), a function unit and a calling sequence of the function unit, and algorithm configuration and parameter configuration of the function unit.

Furthermore, if a plurality of function units have a same function, whereas computing capacities and storage capacities are different, then RAT access technology configuration information also includes a function performance index of a function unit required in an AP, so that different access technology configuration information is configured for the AP according to different RATs, thereby satisfying a specific function requirement of an access point in a communication system.

The access point AP can be applied to different radio access technologies RAT according to different calling sequences of the function unit, and through the access technology configuration information generated by the control device, the access point configures a newly inserted module so as to satisfy a different current RAT technology.

612, the access point identifies a function unit required for the access point, records a calling sequence of the function unit, and generates configuration information of the function unit.

Herein, an internal proxy of the access point selects a function unit required in the access point, and records a calling sequence of the function unit according to the access technology configuration information sent by the control device received in step 611, and completes the configuration of the corresponding function unit.

613, an internal part of the access point sends the configuration information to the function unit, and thus completes the configuration of the corresponding function unit.

Herein, based on step 612, the internal proxy of the access point will distribute the access technology configuration information to the function unit according to the access technology configuration information sent by the control device, and configures the function unit.

Before the access point sends the registration request to the control device, the internal proxy of the access point will register a function unit list of a newly inserted module, and then the function unit list of the new module is sent to the control device by the access point, herein, in the embodiment of the present invention, the internal proxy takes a built-in module of the access point as an example, specific positions of the internal proxy and the access point are determined according to an actual situation, which will not be defined herein.

In the embodiment of the present invention, information used for RAT activation, i.e., access technology configuration information sent by a control device to an access point, may be sent by the control device after receiving parameter information of the current access technology sent by a network side device, at this time, when the control device sends configuration information to the access point, an identification of the RAT also needs to be carried.

Herein, corresponding to the embodiments in FIG. 4 and FIG. 5, in the embodiment corresponding to FIG. 6, an access point actively selects a function unit required in the access point by receiving access technology configuration information generated by a control device, and records a calling sequence of the function unit.

Likewise, corresponding to the embodiment in FIG. 5, in the present invention, a module class identification may be registered when an access point registers a new module, and the access point actively selects a function unit internally required when the control device configures access technology configuration information of the access point.

According to a method for access technology configuration provided in the embodiment of the present invention, a control device receives all function unit lists of a new module or a newly-added function unit list of the new module sent by the access point, determines whether a function unit in an access point matches a function unit list in a current access technology, and, if not matching, then sends a query message to a network side device so as to obtain a corresponding parameter message, and generates access technology configuration information of the function unit in the corresponding access point according to the parameter message, so that the access point can select a function unit required for the access point according to the access technology configuration information to thereby satisfy different access technologies, and thus reuse of the function unit can be realized according to corresponding multiple access technologies, thereby network resources are saved, and a problem of waste of resources resulting from incapacity to fully utilize the network resources is solved.

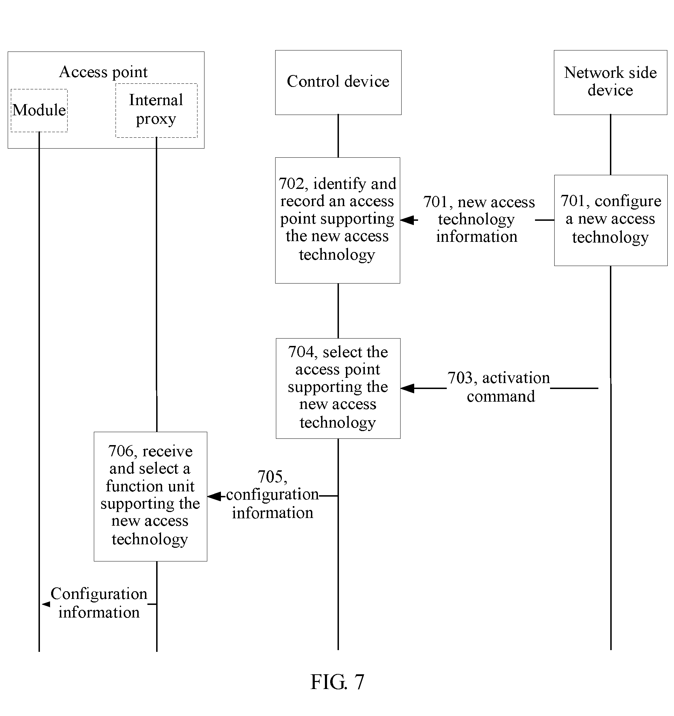

Based on the embodiments as shown in FIG. 1, FIG. 2, FIG. 3, FIG. 4, FIG. 5 and FIG. 6, reference may be made to FIG. 7, an embodiment of the present invention provides a method for access technology configuration, as shown in FIG. 7, which is a process where a network side device upgrades an access technology, and specific steps thereof are as below:
701, a network side device configures a new access technology, and sends access technology information of the new access technology to a control device.

The new access technology information includes: a version identification of the access technology, a version full function list of the access technology and protocol stack software corresponding to a function unit.

The access technology herein includes: radio access technologies such as wireless fidelity WIFI, long term evolution (Long Term Evolution, LTE), third generation mobile communication technology (3rd-generation, 3G), etc.

702, The control device receives the new access technology information sent by the network side device, and identifies and records a supporting capacity of an access point for the new access technology according to the new access technology information.

Herein, the control device Controller identifies a function unit of the access point (Access Point, AP) to match the same with a full function list of a new access technology version, if the matching between the function unit in the AP and the full function list of the new access technology version succeeds, then record that the AP supports the new access technology version.

If the matching between the function unit in the AP and the full function list of the new access technology version fails, then don't record that the AP is capable of supporting the new access technology version. Thus, when the access point receives a newly inserted module, for this access technology, the control device only selects an AP capable of supporting the access technology.

The control device receives new access technology information sent by the network side device, which specifically includes, taking the access technology WIFI as an example, the new access technology information includes version identifications, version full function lists and protocol stack software corresponding to the function units of multiple versions, so that a communication system formed by at least one access point, a control device and a network side device can be compatible with protocols of multiple versions.

703, the network side device sends an activation command of the access technology, so that the control device selects an access point and/or a function unit corresponding to the access technology according to the activation command.

704, the control device receives an activation command of the new access technology sent by the network side device.

The activation command of the access technology is used to activate access technology information received by the control device, so that the control device can select an access point supporting the access technology and a function unit supporting the access technology according to an identification of the new access technology.

705, the control device sends configuration information of the new access technology to the access point.

The configuration information of the access technology sent by the control device to the access point includes: a version identification of the access technology, a function unit required for the access technology and a calling sequence of the function unit, algorithm configuration and parameter configuration of the function unit, and protocol stack software corresponding to the function unit.

706, the access point receives the configuration information and selects a function unit required for forming the access point, records a calling sequence of the function unit and generates configuration information of the function unit.

Herein, an internal proxy identification node of the access point selects a function unit internally required for the access node, records a calling sequence of the function unit according to the configuration information sent by the control device received in step 705, and completes the configuration of the corresponding function unit.

The internal proxy identification node in the access point is configured to register and configure the function unit in the access point.

In a method for access technology configuration provided in the embodiment of the present invention, a network side device configures a new access technology, and supporting capacities of an access point and of a control device for the new access technology are identified at the network side, so that the control device and the access point acquire corresponding configuration as desired, thereby preventing the network side device from sending access technology configuration information to an entire communication system when the system upgrades a new access, and thus reuse of the function unit can be realized according to corresponding multiple access technologies, and network resources are thereby saved, and a problem of waste of resources resulting from incapacity to fully utilize the network resources is solved.

In the embodiments corresponding to FIG. 4, FIG. 5, FIG. 6 and FIG. 7 of the present invention, an access point, a control device and a network side device form a communication system which can realize a method for access technology configuration, in a communication system composed of an access point and a control device and a communication system composed of a control device and a network side device, a method for access technology configuration provided in the present invention is still applicable to the communication systems composed of the access point and the control device, and of the control device and the network side device.

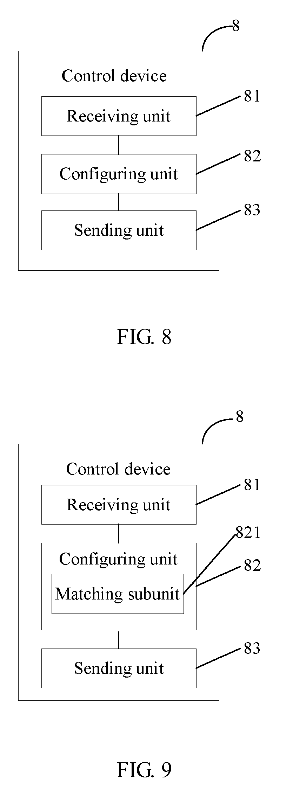

An embodiment of the present invention provides a control device 8, the control device may be specifically any device that can realize control of multiple access technologies in a mobile communication network, such as any kind of network controller in the mobile communication network, a specific form of the control device is not specifically limited in the embodiment of the present invention, and is subject to that it can implement any method for access technology configuration provided in embodiments of the present invention above, reference may be made to FIG. 8, including:
a receiving unit 81, configured to receive a registration request of an access point, where the registration request includes a function unit list or a module class identification in the access point, the function unit list includes all function unit lists of a new module in the access point or a newly-added function unit list of the new module, and the module class identification is used to differentiate modules in the access point which include different function units;
a configuring unit 82, configured to identify an access technology of the access point according to the function unit list or the module class identification received by the receiving unit, and generate access technology configuration information; and
a sending unit 83, configured to send the access technology configuration information configured by the configuring unit to the access point, so that the access point configures the access technology corresponding to the access point according to the access technology configuration information.

According to a control device provided in the embodiment of the present invention, the control device queries a network side device and configures corresponding access technology configuration information of a function unit for an access point according to access technology information provided by the network side device, and the function unit corresponding to the access technology is configured in the access point, so that the function unit can be applied to multiple access technologies and configuration information of a new access technology can be saved via a network side device, and thus reuse of the function unit can be realized according to corresponding multiple access technologies, network resources are thereby saved, and a problem of waste of resources resulting from incapacity to fully utilize the network resources is solved.

Furthermore, a new module in the access point includes at least one function unit and a function unit list corresponding to the function unit or a module class identification.

Alternatively, reference may be made to FIG. 9, the configuring unit 82 includes:
a matching subunit 821, configured to record a newly-added function unit in the access point according to the function unit list, and match each function unit included in the access point with a function unit required for a current access technology;
or,
the matching subunit 821, further configured to identify a newly-added function unit in the access point according to the module class identification, and match a function unit required for a current access technology with each function unit included in the access point;
the matching subunit 821 further configured to: if the function unit list of the access technology matches the function unit in the access point, then record that the access point is capable of supporting the access technology and generate the access technology configuration information.

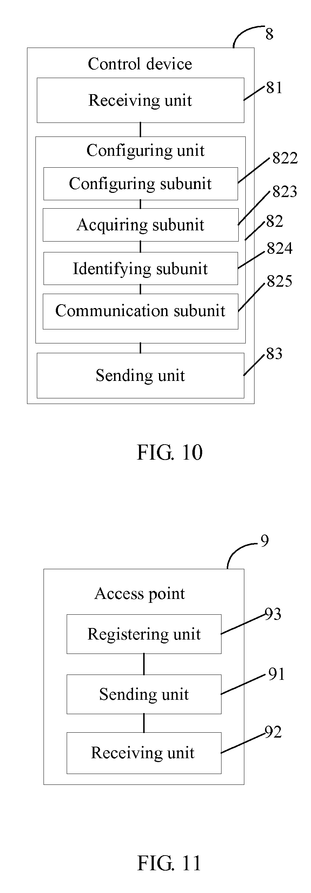

Alternatively, reference may be made to FIG. 10, the configuring unit 82 includes:
a configuring subunit 822, configured to: if the control device cannot identify the access technology, then send a query message to a network side device;
an acquiring subunit 823, configured to receive a function calling message sent by the network side device according to the query message, where the function calling message includes an identification of an access technology to which a function unit belongs and a full function list of the access technology.

Herein, through querying the network side device, the control device selects an access point (Access Point, AP) of which a radio access technology (Radio Access Technology, RAT) can be identified and a function unit supporting the access technology, and generates access technology configuration information to enable the AP to record a calling sequence of the function unit and complete configuration of the corresponding function unit, thereby solving a problem of waste of resources resulting from incapacity to fully utilize network resources.
an identifying subunit 824, configured to identify an access technology that can be supported by the function unit in the access point according to the function calling message; and
a communication subunit 825, configured to receive an activation command sent by the network side network and generate the access technology configuration information.

Alternatively, the access technology configuration information includes: an identification of the access technology, a calling sequence of a function unit required for the new module, and algorithm configuration and parameter configuration of the function unit.

Alternatively, the query message includes: a function unit list included in the new module or a newly-added function unit list of the new module, or a class identification of the new module.

Alternatively, the control device 8 further includes:
the receiving unit 81, further configured to receive new access technology information sent by the network side device, and identify and record a supporting capacity of the access point for a new access technology according to the new access technology information;
the receiving unit 81 is further configured to receive an access technology activation command sent by the network side device, where, the access technology activation command is used to activate the new access technology information received by the control device, so that the control device can select an access point supporting the new access technology and a function unit supporting the new access technology according to an identification of the new access technology; and
the sending unit 83 is further configured to send configuration information of the new access technology to the access point.

Furthermore, the new access technology information includes: a version identification of the access technology, a version full function list of the access technology, and protocol stack software corresponding to the function unit.

Furthermore, alternatively, the configuration information of the new access technology includes: a version identification of the access technology, a function unit required for the access technology and a calling sequence of the function unit, and algorithm configuration and parameter configuration of the function unit and protocol stack software corresponding to the function unit.

According to a control device provided in the embodiment of the present invention, the control device receives a new access technology version sent by a network side device, selects an access point supporting the new access technology version and generates configuration information for configuring the access point according to the new access technology version, so that the access point can select a function unit internally required in the access point, record a calling sequence of the function unit, and complete the configuration of the corresponding function unit, and thus the function unit can be configured according to multiple access technologies, thereby solving a problem of waste of resources resulting from incapacity to fully utilize network resources.

An embodiment of the present invention provides an access point 9, the access point may be specifically any device in a mobile communication network that can realize operation of multiple access technologies, such as a base station, a specific form of the access point is not specifically limited in the embodiment of the present invention, and is subject to that it can implement any method for access technology configuration provided in embodiments of the present invention above, reference may be made to FIG. 11, including:
a sending unit 91, configured to send a registration request to a control device, where the registration request includes a function unit list or a module class identification in the access point, the function unit list includes all function unit lists of a new module in the access point or a newly-added function unit list of the new module, and the module class identification is used to differentiate modules in the access point which include different function units;
a receiving unit 92, configured to receive a registration request response message sent by the control device according to the registration request;
the receiving unit 92 being further configured to receive access technology configuration information corresponding to a module in the access point which is generated by the control device according to the function unit list, and configure a function unit within the access point according to the access technology configuration information.

According to an access point provided in the embodiment of the present invention, a control device queries a network side device and configures corresponding access technology configuration information of a function unit for the access point according to the access technology information provided by the network side device, and the function unit corresponding to the access technology is configured in the access point, so that the function unit can be applied to multiple access technologies and configuration information of a new access technology can be saved via the network side device, and thus reuse of the function unit can be realized according to corresponding multiple access technologies, network resources are thereby saved, and a problem of waste of resources resulting from incapacity to fully utilize the network resources is solved.

Furthermore, the new module in the access point includes at least one function unit and the function unit list corresponding to the function unit or the module class identification.

Alternatively, reference may be made to FIG. 11, the access point 9 further includes:
a registering unit 93, configured to register the function unit list included in the new module or identify a class identification of the new module before the access point sends the registration request to the control device.

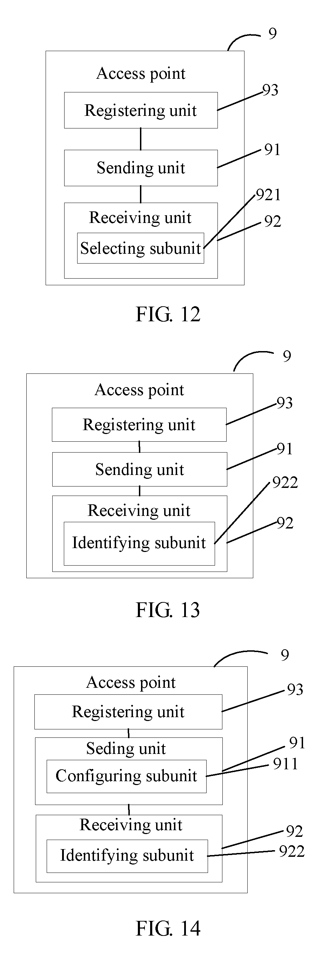

Alternatively, reference may be made to FIG. 12 and FIG. 13, the receiving unit 92 includes:
a selecting subunit 921, configured to select a function unit required for the access technology, and record a calling sequence of the function unit and generate configuration information of the function unit;
or,
an identifying subunit 922, configured to identify a function unit required for the access technology, and record a calling sequence of the function unit and generate configuration information of the function unit.

Alternatively, reference may be made to FIG. 14, the sending unit 91 further includes:
a configuring subunit 911, configured to, after the calling sequence of the function unit is recorded and the configuration information of the function unit is generated, send the configuration information to the function unit via an internal proxy identification node of the access point and complete the configuration of the function unit, where the internal proxy identification node is configured to register and configure the function unit in the access point.

According to an access point provided in the embodiment of the present invention, a control device queries a network side device and configures corresponding access technology configuration information of a function unit for the access point according to access technology information provided by the network side device, and the function unit corresponding to the access technology is configured in the access point, so that the function unit can be applied to multiple access technologies and configuration information of a new access technology can be saved via the network side device, and thus the function unit can be configured according to multiple access technologies, thereby solving a problem of waste of resources resulting from incapacity to fully utilize the network resources.

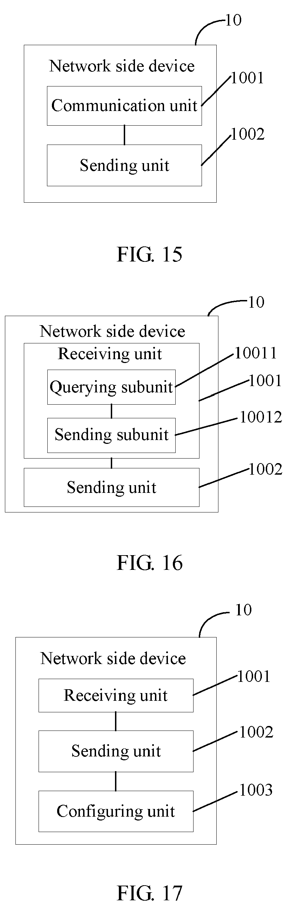

An embodiment of the present invention provides a network side device 10, the network side device may be specifically any device in a mobile communication network that can realize operation of multiple access technologies, such as a database in the mobile communication network, a specific form of the network side device is not specifically limited in the embodiment of the present invention, and is subject to that it can implement any method of access technology configuration provided in embodiments of the present invention above, reference may be made to FIG. 15, including:
a communication unit 1001, configured to receive a query message sent by a control device, and send a function calling message of a current access technology according to the query message, so that the control device identifies an access technology that can be supported by a function unit in an access point according to the function calling message; and
a sending unit 1002, configured to send an activation command to the control device, so that the control device selects an access point supporting the access technology and/or generates access technology configuration information corresponding to the function unit according to the activation command.

According to a network side device provided in the embodiment of the present invention, a control device queries the network side device and configures corresponding access technology configuration information of a function unit for an access point according to access technology information provided by the network side device, and the function unit corresponding to the access technology is configured in the access point, so that the function unit can be applied to multiple access technologies and configuration information of a new access technology can be saved via the network side device, and thus reuse of the function unit can be realized according to corresponding multiple access technologies, network resources are thereby saved, and a problem of waste of resources resulting from incapacity to fully utilize the network resources is solved.

Alternatively, reference may be made to FIG. 16, the receiving unit 1001 includes:
a querying subunit 10011, configured to search an access technology corresponding to the function unit according to a newly-added function unit list carried in the query message, and generate the function calling message according to an identification of the access technology corresponding to the function unit and a full function list of the access technology; and
a sending subunit 10012, configured to send the function calling message generated by the querying subunit to the control device;
or,
a querying subunit 10011, configured to search a function unit corresponding to a module according to a module class identification carried in the query message, and generate the function calling message according to an identification of the access technology corresponding to the function unit and a full function list of the access technology; and
the sending subunit 10012 is configured to send the function calling message generated by the querying subunit to the control device.

Furthermore, the module class identification is used to differentiate modules in the access point which include different function units.

Alternatively, reference may be made to FIG. 17, the network side device 10 further includes:
a configuring unit 1003, configured to configure a new access technology, and send access technology information of the new access technology to the control device;
the sending unit 1002 being configured to send an activation command corresponding to the new access technology, so that the control device selects an access point and/or a function unit corresponding to the access technology according to the activation command.

Furthermore, the access technology information includes: a version identification of the access technology, a version full function list of the access technology and protocol stack software corresponding to the function unit.

According to a network side device provided in the embodiment of the present invention, through receiving a new access technology version sent by the network side device, a control device selects an access point supporting the new access technology version and generates configuration information for configuring the access point according to the new access technology version, so that the access point can select a function unit internally required for the access point, record a calling sequence of the function unit, and complete the configuration of the corresponding function unit, and thus reuse of the function unit can be realized according to corresponding multiple access technologies, network resources are thereby saved, and a problem of waste of resources resulting from incapacity to fully utilize the network resources is solved.

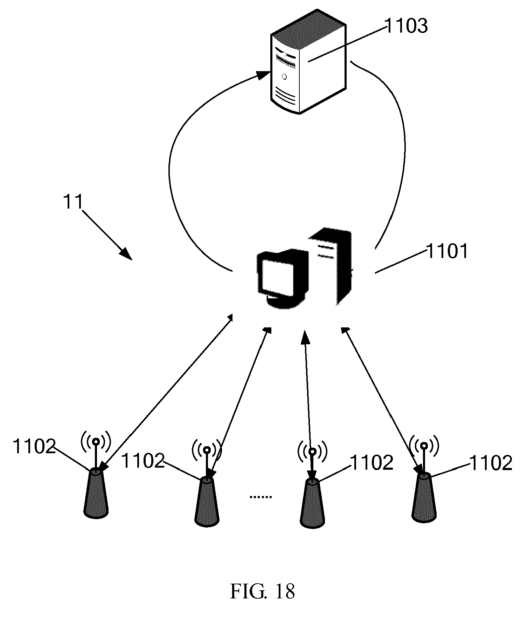

The present invention provides a communication system 11, reference may be made to FIG. 18, including: a control device 1101, at least one access point 1102 and a network side device 1103, where,
the control device 1101 is any control device as shown in FIG. 8~FIG. 10, the at least one access point 1102 is any access point as shown in FIG. 11~FIG. 14, and the network side device 1103 is any network side device as shown in FIG. 15~FIG. 17.

According to a communication system provided in the embodiment of the present invention, a control device queries a network side device and configures corresponding access technology configuration information of a function unit for an access point according to access technology information provided by the network side device, and the function unit corresponding to the access technology is configured in the access point, so that the function unit can be applied to multiple access technologies and configuration information of a new access technology can be saved via the network side device, and thus reuse of the function unit can be realized according to corresponding multiple access technologies, network resources are thereby saved, and a problem of waste of resources resulting from incapacity to fully utilize the network resources is solved.

The above descriptions are merely specific embodiments of the present invention; however, the protection scope of the present invention is not limited thereto. Any modification or replacement that may be readily envisaged of by persons skilled in the art within the protection scope of the present invention should fall into the protection scope of the present invention. Thus, the protection scope of the present invention shall be subject to the claims.

## Claims

1. A method for access technology configuration, comprising:
receiving a registration request of an access point, wherein the registration request comprises a function unit list or a module class identification in the access point, the function unit list comprises all function unit lists of a new module in the access point or a newly-added function unit list of a new module, and the module class identification is used to differentiate modules in the access point which comprise different function units;
identifying, according to the function unit list or the module class identification, an access technology of the access point, and generating access technology configuration information; and
sending the access technology configuration information to the access point, so that the access point configures the access technology corresponding to the access point according to the access technology configuration information.

2. The method according to claim 1, wherein the new module in the access point comprises at least one function unit and a function unit list corresponding to the function unit or the module class identification.

3. The method according to claim 1 or 2, wherein the identifying, according to the function unit list or the module class identification, the access technology of the access point, and generating the access technology configuration information, comprising:
recording a newly-added function unit in the access point according to the function unit list, and matching a function unit required for a current access technology with each function unit comprised in the access point;
or,
identifying the newly-added function unit in the access point according to the module class identification, and matching the function unit required for the current access technology with each function unit comprised in the access point;
if the function unit list of the access technology matches the function unit in the access point, then recording that the access point is capable of supporting the access technology and generating the access technology configuration information.

4. The method according to claim 1 or 2, wherein the identifying, according to the function unit list or the module class identification, the access technology of the access point, and generating the access technology configuration information, further comprising:
if the access technology cannot be identified, then sending a query message to a network side device;
receiving a function calling message sent by the network side device according to the query message, wherein the function calling message comprises an identification of an access technology to which a function unit belongs and a full function list of the access technology;
identifying, according to the function calling message, an access technology that can be supported by the function unit in the access point; and
receiving an activation command sent by the network side network and generating the access technology configuration information.

5. The method according to claim 4, wherein the access technology configuration information comprises:
the identification of the access technology, a calling sequence of a function unit required for the new module, and algorithm configuration and parameter configuration of the function unit.

6. The method according to claim 4, wherein the query message comprises:
a function unit list comprised in the new module or the newly-added function unit list of the new module, or a class identification of the new module.

7. The method according to claim 1, wherein the method further comprises:
receiving new access technology information sent by the network side device, and identifying and recording supporting capacity of the access point for a new access technology according to the new access technology information;
receiving an access technology activation command sent by the network side device, wherein the access technology activation command is used to activate the new access technology information received by a control device, so that the control device can select an access point supporting the new access technology and a function unit supporting the new access technology according to an identification of the new access technology; and
sending configuration information of the new access technology to the access point.

8. The method according to claim 7, wherein the new access technology information comprises:
a version identification of the access technology, a version full function list of the access technology, and protocol stack software corresponding to the function unit.

9. The method according to claim 7, wherein the configuration information of the new access technology comprises:
a version identification of the access technology, a function unit required for the access technology and a calling sequence of the function unit, and algorithm configuration and parameter configuration of the function unit and protocol stack software corresponding to the function unit.

10. A method for access technology configuration, comprising:
sending a registration request to a control device, wherein the registration request comprises a function unit list or a module class identification in an access point, the function unit list comprises all function unit lists of a new module in the access point or a newly-added function unit list of the new module, and the module class identification is used to differentiate modules in the access point which comprise different function units;
receiving a registration request response message sent by the control device according to the registration request; and
receiving access technology configuration information corresponding to a module in the access point which is generated by the control device according to the function unit list, and configuring a function unit within the access point according to the access technology configuration information.

11. The method according to claim 10, wherein the new module in the access point comprises at least one function unit and a function unit list corresponding to the function unit or the module class identification.

12. The method according to claim 10 or 11, wherein, before sending the registration request to the control device, further comprising:
registering the function unit list comprised in the new module or identifying a class identification of the new module.

13. The method according to claim 10, wherein the receiving the access technology configuration information corresponding to the module in the access point which is generated by the control device according to the function unit list, and configuring the function unit within the access point according to the access technology configuration information, comprises:
selecting, by the access point, a function unit required for an access technology, and recording a calling sequence of the function unit and generating configuration information of the function unit;
or,
identifying, by the access point, the function unit required for the access technology, and recording the calling sequence of the function unit and generating the configuration information of the function unit.

14. The method according to claim 13, wherein, after recording the calling sequence of the function unit and generating the configuration information of the function unit, further comprising:
sending the configuration information to the function unit via an internal proxy identification node of the access point and completing the configuration of the function unit, wherein the internal proxy identification node is configured to register and configure the function unit in the access point.

15. A method for access technology configuration, comprising:
receiving a query message sent by a control device, and sending a function calling message of a current access technology according to the query message, so that the control device identifies an access technology that can be supported by a function unit in an access point according to the function calling message; and
sending an activation command to the control device, so that the control device selects an access point supporting the access technology and/or generates access technology configuration information corresponding to the function unit according to the activation command.

16. The method according to claim 15, wherein the receiving the query message sent by the control device, and sending the function calling message of the current access technology according to the query message, comprises:
searching, by the network side device, an access technology corresponding to the function unit according to a newly-added function unit list carried in the query message, and generating the function calling message according to an identification of the access technology corresponding to the function unit and a full function list of the access technology; and
sending the function calling message to the control device;
or,
searching, by the network side device, a function unit corresponding to the module according to a module class identification carried in the query message, and generating the function calling message according to the identification of the access technology corresponding to the function unit and the full function list of the access technology; and
sending the function calling message to the control device.

17. The method according to claim 16, wherein the module class identification is used to differentiate modules in the access point which comprise different function units.

18. The method according to claim 15, wherein the method further comprises:
configuring a new access technology, and sending access technology information of the new access technology to the control device;
sending an activation command corresponding to the new access technology, so that the control device selects an access point and/or a function unit corresponding to the access technology according to the activation command.

19. The method according to claim 18, wherein the access technology information of the new access technology comprises:
a version identification of the access technology, a version full function list of the access technology and protocol stack software corresponding to the function unit.

20. A control device, comprising:
a receiving unit, configured to receive a registration request of an access point, wherein the registration request comprises a function unit list or a module class identification in the access point, the function unit list comprises all function unit lists of a new module in the access point or a newly-added function unit list of the new module, and the module class identification is used to differentiate modules in the access point which comprise different function units;
a configuring unit, configured to identify, according to the function unit list or the module class identification received by the receiving unit, an access technology of the access point , and generate access technology configuration information; and
a sending unit, configured to send the access technology configuration information configured by the configuring unit to the access point, so that the access point configures the access technology corresponding to the access point according to the access technology configuration information.

21. The control device according to claim 20, wherein the new module in the access point comprises at least one function unit and a function unit list corresponding to the function unit or the module class identification.

22. The control device according to claim 20 or 21, wherein the configuring unit further comprises:
a matching subunit, configured to record, according to the function unit list, a newly-added function unit in the access point, and match each function unit comprised in the access point with a function unit required for a current access technology;
or,
the matching subunit being further configured to identify, according to the module class identification, the newly-added function unit in the access point, and match the function unit required for the current access technology with each function unit comprised in the access point;
the matching subunit being further configured to: if the function unit list of the access technology matches the function unit in the access point, then record that the access point is capable of supporting the access technology and generate the access technology configuration information.

23. The control device according to claim 20 or 21, wherein the configuring unit further comprises:
a configuring subunit, configured to: if the access technology cannot be identified, then send a query message to a network side device;
an acquiring subunit, configured to receive a function calling message sent by the network side device according to the query message, wherein the function calling message comprises an identification of an access technology to which a function unit belongs and a full function list of the access technology;
an identifying subunit, configured to identify, according to the function calling message, an access technology that can be supported by the function unit in the access point; and
a communication subunit, configured to receive an activation command sent by the network side network and generate the access technology configuration information.

24. The control device according to claim 23, wherein the access technology configuration information comprises:
an identification of the access technology, a calling sequence of a function unit required for the new module, and algorithm configuration and parameter configuration of the function unit.

25. The control device according to claim 23, wherein the query message comprises:
a function unit list comprised in the new module or the newly-added function unit list of the new module, or a class identification of the new module.

26. The control device according to claim 20, wherein the control device further comprises:
the receiving unit further configured to receive new access technology information sent by the network side device, and identify and record a supporting capacity of the access point for a new access technology according to the new access technology information;
the receiving unit further configured to receive an access technology activation command sent by the network side device, wherein the access technology activation command is used to activate the new access technology information received by the control device, so that the control device can select an access point supporting the new access technology and a function unit supporting the new access technology according to an identification of the new access technology; and
the sending unit further configured to send configuration information of the new access technology to the access point.

27. The control device according to claim 26, wherein the new access technology information comprises:
a version identification of the access technology, a version full function list of the access technology, and protocol stack software corresponding to the function unit.

28. The control device according to claim 26, wherein the configuration information of the new access technology comprises:
a version identification of the access technology, a function unit required for the access technology and a calling sequence of the function unit, and algorithm configuration and parameter configuration of the function unit and protocol stack software corresponding to the function unit.

29. An access point, comprising:
a sending unit, configured to send a registration request to a control device, wherein the registration request comprises a function unit list or a module class identification in the access point, the function unit list comprises all function unit lists of a new module in the access point or a newly-added function unit list of the new module, and the module class identification is used to differentiate modules in the access point which comprise different function units;
a receiving unit, configured to receive a registration request response message sent by the control device according to the registration request;
the receiving unit being further configured to receive access technology configuration information corresponding to a module in the access point which is generated by the control device according to the function unit list, and configure a function unit within the access point according to the access technology configuration information.

30. The access point according to claim 29, wherein the new module in the access point comprises at least one function unit and a function unit list corresponding to the function unit or the module class identification.

31. The access point according to claim 29 or 30, wherein the access point further comprises:
a registering unit, configured to, before the registration request is sent to the control device, register the function unit list comprised in the new module or identify a class identification of the new module.

32. The access point according to claim 29, wherein the receiving unit comprises:
a selecting subunit, configured to select a function unit required for the access technology, and record a calling sequence of the function unit and generate configuration information of the function unit;
or,
an identifying subunit, configured to identify the function unit required for the access technology, and record the calling sequence of the function unit and generate the configuration information of the function unit.

33. The access point according to claim 32, wherein the sending unit further comprises:
a configuring subunit, configured to, after the calling sequence of the function unit is recorded and the configuration information of the function unit is generated, send the configuration information to the function unit via an internal proxy identification node of the access point and complete the configuration of the function unit, wherein the internal proxy identification node is configured to register and configure the function unit in the access point.

34. A network side device, comprising:
a communication unit, configured to receive a query message sent by a control device, and send, according to the query message, a function calling message of a current access technology, so that the control device identifies an access technology that can be supported by a function unit in an access point according to the function calling message; and
a sending unit, configured to send an activation command to the control device, so that the control device selects an access point supporting the access technology and/or generates access technology configuration information corresponding to the function unit according to the activation command.

35. The network side device according to claim 34, wherein the communication unit comprises:
a querying subunit, configured to search an access technology corresponding to the function unit according to a newly-added function unit list carried in the query message, and generate the function calling message according to an identification of the access technology corresponding to the function unit and a full function list of the access technology; and
a sending subunit, configured to send the function calling message generated by the querying subunit to the control device;
or,
the querying subunit, configured to search a function unit corresponding to the module according to a module class identification carried in the query message, and generate the function calling message according to the identification of the access technology corresponding to the function unit and the full function list of the access technology; and
the sending subunit, configured to send the function calling message generated by the querying subunit to the control device.

36. The network side device according to claim 35, wherein the module class identification is used to differentiate modules in the access point which comprise different function units.

37. The network side device according to claim 34, wherein the network side device further comprises:
a configuring unit, configured to configure a new access technology, and send access technology information of the new access technology to the control device;
the sending unit is configured to send an activation command corresponding to the new access technology, so that the control device selects an access point and/or a function unit corresponding to the access technology according to the activation command.

38. The network side device according to claim 37, wherein the access technology information of the new access technology comprises:
a version identification of the access technology, a version full function list of the access technology and protocol stack software corresponding to the function unit.

39. A communication system, comprising: a control device, at least one access point and a network side device, wherein,
the control device is a control device according to any one of claims 20-28, the at least one access point is an access point according to any one of claims 29-33, and the network side device is a network side device according to any one of claims 34-38.
